# EUROPÄISCHE PATENTSCHRIFT

(11) **EP 0 513 574 B1**
(45) Veröffentlichungstag und Bekanntmachung des Hinweises auf die Patenterteilung: **06.03.1996**
(21) Anmeldenummer: 92106992.8
(22) Anmeldetag: 24.04.1992
(51) Int. Cl.: A01F 12/24

(54) **Dreschkorb**
Concave
Contre-batteur

(30) Priorität: 18.05.1991 DE 4116354
(43) Veröffentlichungstag der Anmeldung: 19.11.1992
(73) Patentinhaber: DEERE & COMPANY, Moline, Illinois 61265 (US)
(72) Erfinder: Dannigkeit, Helmut, W-6661 Battweiler (DE)
(74) Vertreter: Feldmann, Bernhard

(56) Entgegenhaltungen:
- DE-B- 1 130 641
- DE-C- 1 130 640
- FR-A- 1 479 557
- US-A- 2 255 244
- US-A- 2 686 523

## Beschreibung

Die Erfindung betrifft einen Dreschkorb, der mit einer Dreschtrommel zusammenwirkt, Querleisten enthält und mit der Dreschtrommel einen durch die wahlweise Einfügung von die Dreschwirkung beeinflussenden Austauschleisten veränderbaren Einzugsspalt bildet.

Dreschkörbe werden in Mähdreschern und Dreschmaschinen benutzt und bestehen im wesentlichen aus Bogen- und Querleisten, die zwischen sich Öffnungen belassen. Ein Dreschkorb umgibt eine Dreschtrommel auf einem Teil ihres Umfangs und beläßt zu dieser einen Spalt, durch den zu dreschendes Erntegut hindurch gezwängt wird. Während das Erntegut durch den Spalt befördert wird, scheiden sich Erntegutteile - die Körner - ab und fallen durch die Öffnungen einer Reinigungsvorrichtung zu. Aufgrund der Beschaffenheit des Ernteguts lassen sich die Erntegutteile mehr oder weniger leicht herauslösen, so daß es erforderlich ist, Dreschkörbe dem jeweiligen Erntegut anpassen zu können.

Die FR-PS-1.479.557 offenbart einen Dreschkorb, der gemeinsam mit einer Dreschtrommel einen Dreschspalt bildet, durch den Getreide oder sonstiges Erntegut hindurch bewegt und abgeschieden wird. Während im stromabwärts gelegenen Bereich des Dreschkorbs Querleisten vorgesehen sind, die zwischen sich Öffnungen zum Durchtritt des abgeschiedenen Guts bilden, ist im Bereich des Einzugsspalts ein Freiraum gebildet, der der wahlweisen Aufnahme eines Austauschteils dient, das je nach seiner Ausbildung eine glatte Platte, Dreschleisten oder Querleisten enthält. Die Verwendung des jeweiligen Austauschteils ermöglicht es, die Dreschwirkung an die Besonderheiten einzelner Dreschgüter anzupassen.

Dieser Dreschkorb ist insofern nachteilig, als er durch den Freiraum an Festigkeit verliert. Die Befestigung des Austauschteils in dem Freiraum mittels lediglich zweier Schrauben und durch Auflage auf zwei Querleisten führt bei der Belastung durch den hohen Erntegutsatz zu Schwingungen und somit zu einer geringen Standzeit.

Die US-A-2,255,244 offenbart eine Dreschtrommel und einen diese teilweise umgebenden konkaven Teil, der allerdings keinen Dreschkorb, sondern vielmehr eine nicht durchlässige Mulde darstellt. An der Innenseite der Mulde sind zwei Leisten angebracht, an denen das Dreschgut zerrieben werden soll. Eingangsseitig der Mulde ist eine Schälplatte vorgesehen, die den Trennvorgang unterstützen soll und an der Mulde verschieblich gelagert ist. Die Schälplatte erstreckt sich unter einem wesentlich anderen Winkel zu der Drehachse der Dreschtrommel als die Vorderseite der Leisten.

Dieser Dreschkorb ist insofern nachteilig, als er nur unter ganz speziellen Gutbedingungen zu dem gewünschten Ergebnis führt, daß er offensichtlich eine geringe Abscheidekapazität aufweist und von einer schwachen Bauart ist.

Bei einem weiteren bekannten Dreschkorb (DE-AS-1 130 641) wird eine auf ihrer Oberseite profilierte Blechwanne in dem Bereich des Einzugsspalts vorgesehen, um somit einen zusätzlichen Dreschbereich zu schaffen. Ist die zusätzliche Dreschwirkung nicht erforderlich, kann die Blechwanne um 180° geschwenkt werden und funktioniert als Steinfangmulde. Dieser Dreschkorb ist insofern nachteilig, als die Herstellung der Blechwanne sehr aufwendig ist und hohe Kosten verursacht. Zudem ist die hohe Aggressivität der Dreschwirkung mit dieser profilierten Blechwanne nicht unter allen Einsatzverhältnissen von Vorteil.

Bei einem anderen Dreschkorb (US-PS-2,686,523) kann ein Teil der Öffnungen mittels Platten verschlossen werden, so daß ein weniger aggressiv wirkender Dreschvorgang stattfindet. Dieser Dreschkorb ist von Nachteil, weil der Zugang zu den Platten sehr beengt ist und die dennoch ausgedroschenen Erntegutteile nicht der Reinigungsvorrichtung zufallen können, sondern in dem Spalt mitbewegt und evtl. zerrieben werden.

Die der Erfindung zugrunde liegende Aufgabe wird darin gesehen, einen Dreschkorb vorzuschlagen, der für unterschiedliche Dreschbedingungen gerüstet werden kann, wobei Schwingungen vermieden und ein geringer Teileaufwand erreicht werden sollen.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise ist der Dreschkorb so vorbereitet, daß er entweder eine Entgrannerleiste mit seinen Befestigungsmitteln aufnehmen kann, was beim Dreschen von Gerste und Grannenweizen vorteilhaft ist. Oder es kann eine weitere Querleiste angebracht werden, um die Aggressivität des Dreschvorgangs infolge eines vergrößerten Dreschwinkels zu erhöhen. Schließlich kann der Dreschkorb auch ohne eine zusätzliche Querleiste oder Entgrannerleiste mit einem weiten Einzugsspalt verwendet werden, der für einen schonenden Dreschvorgang sorgt, wie dies bei anfälligen Sondergütern angebracht ist.

Die Verwendung einer zusätzlichen Dreschleiste als Entgrannerleiste führt zu einer Entgrannereinrichtung mit geringstem Aufwand, da die Dreschleiste ein Massenprodukt ist, das nur geringe Mehrkosten verursacht. Es ist zwar bekannt (Prospekt: CLAAS, 9/90 (GDS) franz.220/189.002.2), zusätzlich Dreschleisten zwischen die Querleisten des Dreschkorbs zu legen; dadurch wird aber wiederum der gesamte Durchtrittsquerschnitt der Abscheideöffnungen in dem Dreschkorb verringert. Außerdem muß diese Dreschleiste von unten in unbequemer Weise mit mehreren Schrauben befestigt werden.

Die entsprechende Formgebung des Halters führt zu einer sicheren Anlage der Dreschleiste und somit zu einem vibrationsfreien Sitz.

Wird auf den Halter eine zusätzliche Querleiste montiert, vergrößert sich die Dreschzone, ohne gleichzeitig ein zu aggressives Dreschen zu verursachen.

In der Zeichnung ist ein nachfolgend näher beschriebenes Ausführungsbeispiel der Erfindung dargestellt.

Es zeigt:
- Fig. 1: einen erfindungsgemäßen Dreschkorb mit einer Dreschtrommel in Seitenansicht,
- Fig. 2: den Dreschkorb aus Figur 1 mit einer Entgrannerleiste und
- Fig. 3: den Dreschkorb aus Figur 1 mit einer zusätzlichen Querleiste.

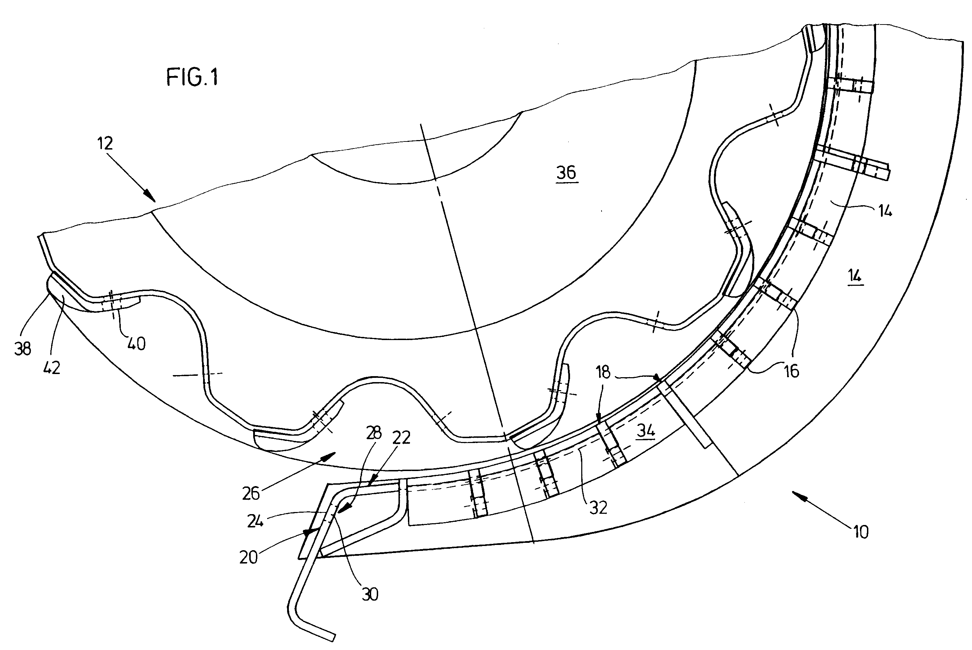

In Figur 1 sind ein Dreschkorb 10 und ein Abschnitt einer im wesentlichen konzentrisch dazu angeordneten Dreschtrommel 12 gezeigt, wie sie in einem Mähdrescher oder einer Dreschmaschine eingebaut sein können.

Der Dreschkorb 10 setzt sich aus radial zu seiner Krümmungsachse ausgerichteten Bogenleisten 14 und einer Vielzahl parallel zu der Krümmungsachse verlaufender Querleisten 16 zusammen. Die Bogenleisten 14 und die Querleisten 16 verlaufen senkrecht zueinander und sind miteinander verschweißt. Die Bogenleisten 14 erstrecken sich über den gesamten Bogenbereich und die Querleisten 16 über die gesamte Breite des Dreschkorbs 10. Die Querleisten 16 laufen in der Dreschtrommel 12 zugelegenen Reibflächen 18 aus, die auf einem Kreisbogen liegen.

Der Dreschkorb 10 schließt in seinem mit Blick auf Figur 1 links gelegenen Endbereich mit einem Halter 20 ab, der eine Oberseite 22 und eine Frontseite 24 enthält. Die Frontseite 24 verläuft zu der Oberseite 22 bei diesem Ausführungsbeispiel unter einem Winkel von ca. 100°. Die Oberseite 22 des Halters 20 bleibt in Richtung zu der Dreschtrommel 12 hinter der von den Reibflächen 18 definierten Kreislinie zurück. Außerdem begrenzt die Oberseite 22 einen mit der Dreschtrommel 12 gebildeten Einzugsspalt 26 nach unten.

In die Frontseite 24 sind von Befestigungsmitteln 28 Bohrungen 30 eingebracht, wobei an die nicht von dem Dreschgut beaufschlagte Rückseite der Frontseite 24 Muttern angeschweißt oder die Bohrungen 30 als Gewindebohrungen ausgebildet sein können, was jedoch nicht dargestellt ist.

In den Querleisten 16 sind nicht gezeichnete Löcher vorgesehen, durch die sich Drähte 32 auf dem gesamten Bogenbereich erstrecken und somit Öffnungen 34 zwischen den Quer- und den Bogenleisten 16 und 14 teilweise verschließen.

Die Dreschtrommel 12 ist herkömmlich ausgebildet und weist radial zu ihrer Rotationsachse ausgerichtete Scheiben 36 auf, auf deren Umfangsfläche gleichmäßig verteilt eine Vielzahl herkömmlicher Dreschleisten 38 befestigt sind. Hierzu sind in die Dreschleisten 38 und in die Umfangsfläche der Scheiben 36 Bohrungen 40 eingebracht, die einen gleichen Abstand zueinander aufweisen und in Deckung zueinander gebracht werden können. Der Abstand der Bohrungen 40 in den Dreschleisten 38 entspricht dem Abstand der Bohrungen 30 in dem Halter 20. Die Dreschtrommel 12 dreht in der mit dem Pfeil angedeuteten Richtung.

Während die Dreschtrommel 12 vollkommen herkömmlich ausgebildet ist, gilt dies für den Dreschkorb 10 nur bis auf den Halter 20, der Teil der Erfindung ist. Der Abstand des Dreschkorbs 10 zu der Dreschtrommel 12 kann mit ebenfalls bekannten und daher nicht näher bezeichneten Mitteln verändert werden.

Es ist mit Blick auf Figur 1 ersichtlich, daß Erntegut, das in den Einzugsspalt 26 hineingezogen wird, auf dem Weg durch den Spalt zwischen dem Außenumfang der Dreschtrommel 12 und dem Innenumfang des Dreschkorbs 10 zerrieben wird und herausgelöste Erntegutteile durch die Öffnungen 34 abgeschieden werden. Der Eingang in den Einzugsspalt 26 ist nicht scharfkantig, so daß der Dreschvorgang relativ schonend beginnt.

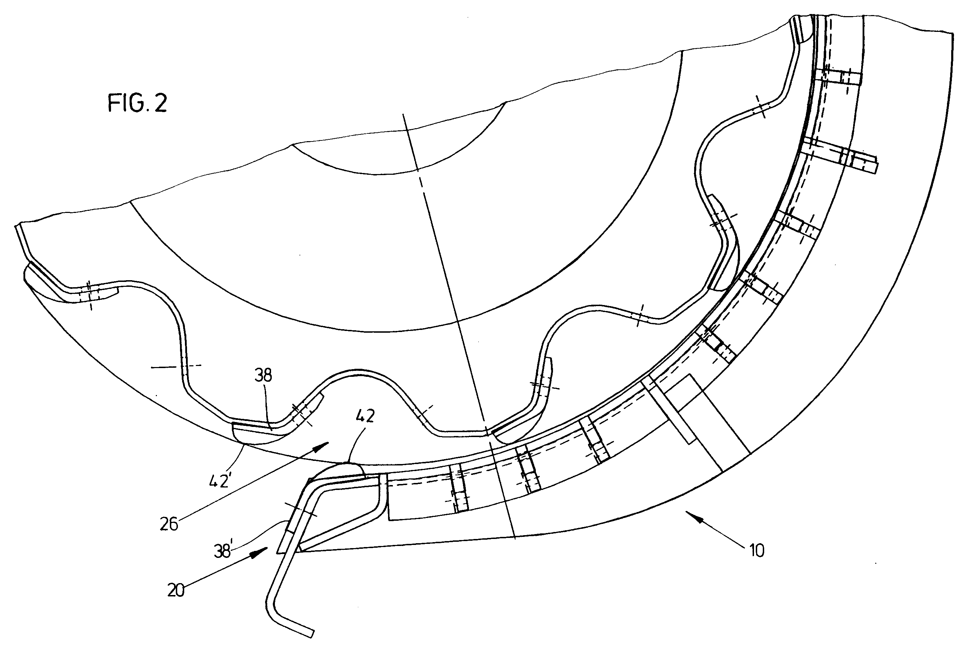

Aus Figur 2 ist zu entnehmen, daß eine Entgrannerleiste 38'in der Form einer Dreschleiste, wie sie auf der Dreschtrommel 12 montiert ist, auf den Halter 20 aufgesetzt und mittels nicht gezeigter, sich durch die Bohrungen 30 und 40 erstreckender Schrauben befestigt ist. Die Entgrannerleiste 38' ist dabei so montiert, daß ihre Rippen 42 zu der Dreschtrommel 12 hinzeigen und mit den Rippen 42' der Dreschleisten 38 auf der Dreschtrommel 12 zusammenwirken können.

Dadurch, daß sich die Oberseite 22 des Halters 20 nicht bis zur Kreislinie der Reibflächen 18 erstreckt, kommen die Rippen 42 der auf dem Halter 20 befestigten Entgrannerleiste 38' auch dann noch nicht mit denen der auf der Dreschtrommel 12 befindlichen Dreschleisten 38 in Berührung, wenn sich der Dreschkorb 10 in seiner der Dreschtrommel 12 nächstgelegenen Stellung befindet. Die Verwendung dieser Entgrannerleiste 38' führt zu einem hervorragenden Entgrannungseffekt beim Dreschen von Gerste oder Grannenweizen.

Der eingangs angegebene Winkel von ca. 100° zwischen der Oberseite 22 und der Frontseite 24 ist deshalb so gewählt, weil er dem Kröpfungswinkel der Dreschleisten 38 entspricht, so daß die so ausgebildete Entgrannerleiste 38' fest auf den Halter 20 aufgesetzt werden kann. Hat die gewählte Dreschleiste 38 einen anderen Winkel, so sollte auch der zwischen der Oberseite 22 und der Frontseite 24 angepaßt werden.

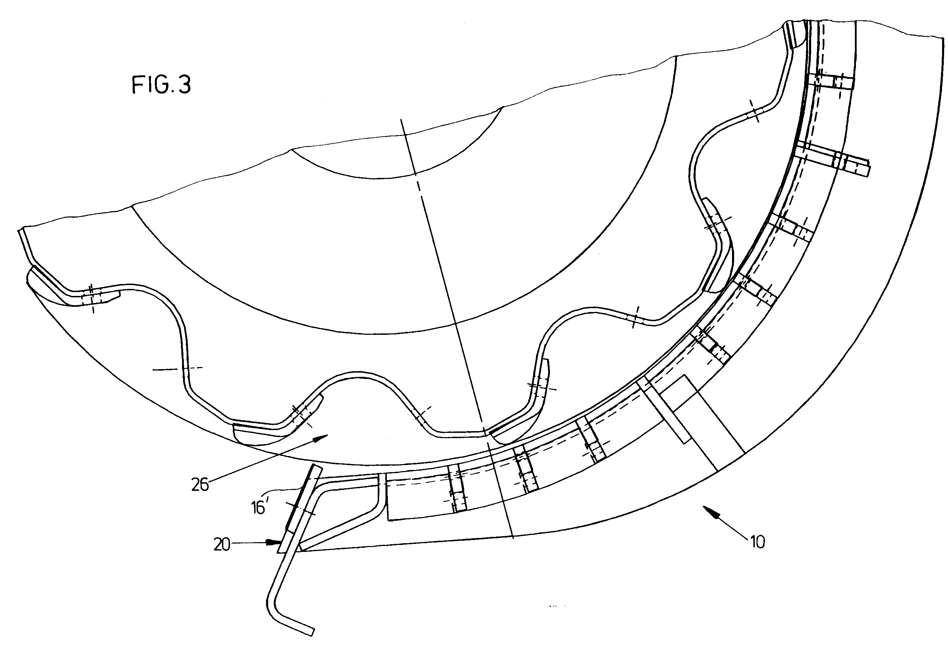

Figur 3 zeigt, daß anstatt der Entgrannerleiste 38' eine weitere Querleiste 16' auf die Frontseite 24 des Halters 20 aufgeschraubt ist, die somit die Anzahl der Querleisten 16 des Dreschkorbs 10 erhöht und eine zusätzliche Dreschzone erbringt. Hierdurch wird eine erhöhte Dreschwirkung erreicht, die jedoch hinter der mit der Entgrannerleiste 38' erreichten zurückbleibt.

## Patentansprüche

1. Dreschkorb (10), der mit einer Dreschtrommel (12) zusammenwirkt, Querleisten (16) enthält und mit der Dreschtrommel (12) einen durch die wahlweise Einfügung von die Dreschwirkung beeinflussenden Austauschleisten veränderbaren Einzugsspalt (26) bildet, wozu an einer Stirnfläche des Dreschkorbs (10) am Anfang des Einzugsspalts (26) ein Kalter (20) vorgesehen ist,
a) der sich in der Haupterstreckungsrichtung der Querleisten (16) erstreckt,
b) der einen mit dem Dreschkorb (10) starr verbundenen Bestandteil darstellt,
c) dessen der Dreschtrommel (12) zugelegene Oberseite (22) weiter von der Dreschtrommel (12) entfernt ist als die Reibflächen (19) der Querleisten (16) und
d) der die Austauschleisten während des Dreschvorgangs mit Befestigungsmitteln (28) unbeweglich hält.

2. Dreschkorb nach Anspruch 1, dadurch gekennzeichnet, daß als Austauschleiste eine als Dreschleiste ausgebildete Entgrannerleiste (38') befestigt ist, wie sie auf der Dreschtrommel (12) verwendet wird.

3. Dreschkorb nach Anspruch 2, dadurch gekennzeichnet, daß die Außenform des Halters (20) der Kröpfung der Entgrannerleiste (38') entspricht.

4. Dreschkorb nach einem oder mehreren der vorherigen Ansprüche, dadurch gekennzeichnet, daß als Austauschleiste eine Querleiste (16') montiert ist.

## Claims

1. A concave (10) which cooperates with a threshing drum (12), comprises transverse bars (16) and forms with the threshing drum (12) an intake gap (26) which is variable by selective fitting of exchange bars affecting the threshing action, wherein a bracket (20) is provided at one end surface of the concave (10) at the start of the intake gap (26) and
a) extends in the main direction of extent of the transverse bars (16),
b) constitutes a component rigidly attached to the concave (10),
c) has its upper side (22) facing the threshing drum (12) further away from the threshing drum (12) than the rubbing surfaces (19) of the transverse bars (16) and
d) retains the exchange bars immovably by means of attachment means (28) during the threshing operation.

2. A concave according to claim 1, characterized in that an awner bar (38') is attached as an exchange bar and is formed as a threshing bar as is used on the threshing drum (12).

3. A concave according to claim 2, characterized in that the outer shape of the bracket (20) corresponds to the curvature of the awner bar (38').

4. A concave according to one or more of the preceding claims, characterized in that a transverse bar (16') is mounted as an exchange bar.

## Revendications

1. Contre-batteur (10), qui coopère avec un batteur (12), contient des barrettes transversales (16) et forme, avec le batteur (12), une fente d'entrée (26), qui peut être modifiée au moyen de l'insertion à volonté de barrettes de remplacement qui influent sur l'action de battage, et dans lequel à cet effet il est prévu, sur la surface frontale du contre-batteur (10), au début de la fente d'entrée (26), un support (20),
a) qui s'étend dans la direction principale d'extension des barrettes transversales (16),
b) qui constitue un composant relié rigidement au contre-batteur (10),
c) dont la face supérieure (22), qui est tournée vers le batteur (12), est plus éloignée du batteur (12) que ne le sont les surfaces de frottement (19) des barrettes transversales (16), et
d) qui maintient immobiles, à l'aide de moyens de fixation (28), les barrettes remplaçables pendant l'opération de battage.

2. Contre-batteur selon la revendication 1, caractérisé en ce qu'une barrette d'ébarbage (38') agencée sous la forme d'une batte, du type utilisé sur le batteur (12), est fixée en tant que barrette remplaçable.

3. Contre-batteur selon la revendication 2, caractérisé en ce que la forme extérieure du support (20) correspond à la forme coudée de la barrette d'ébarbage (38').

4. Contre-batteur selon une ou plusieurs des revendications précédentes, caractérisé en ce qu'une barrette transversale (16') est montée en tant que barrette remplaçable.
